Europäisches Patentamt

European Patent Office

Office européen des brevets

(19)

(11) **EP 0 980 015 A1**

(12) **EUROPEAN PATENT APPLICATION**

(43) Date of publication:
**16.02.2000 Bulletin 2000/07**

(51) Int Cl.$^7$: **G02C 7/04**

(21) Application number: **99306283.5**

(22) Date of filing: **09.08.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.08.1998 US 131928**

(71) Applicant: **JOHNSON & JOHNSON VISION PRODUCTS, INC.**
**Jacksonville, Florida 32216-0995 (US)**

(72) Inventor: **Clutterbuck, Timothy A.**
**Jacksonville, FL 32225 (US)**

(74) Representative: **Mercer, Christopher Paul**
**Carpmaels & Ransford**
**43, Bloomsbury Square**
**London WC1A 2RA (GB)**

(54) **Dynamically stabilized contact lenses**

(57)     The invention provides a dynamically stabilized contact lenses that uses a variably-shaped lenticular zone to stabilize the angular orientation of the lens in relation to the eye.

FIG 1

Optic/Lent. Transition (Optional) 14
Optic Zone 11
Bevel 13
10
0°
Lenticular Zone 12

Lens Face View (Lenticular Area Hatched)

## Description

### Field of the Invention

The invention relates to dynamically stabilized contact lenses. In particular, the invention provides contact lenses that use a variably-shaped lenticular zone to stabilize the angular orientation of the lens in relation to the eye.

### Background of the Invention

It is known that the correction of certain optical defects can be accomplished by imparting non-spherical corrective characteristics to a contact lens, such as cylindrical, bifocal, or multifocal characteristics. The use of contact lenses with these characteristics is problematic in that the lens must be maintained at a specific angular orientation in relation to the eye to be effective. However, the lens will rotate on the eye due to blinking as well as eyelid and tear fluid movement.

Lenses designed to maintain their angular orientation typically are of two general types. One type uses static stabilization to maintain the lens orientation. Examples of static stabilization methods include prismatic balancing, thickening of the lower lens edge, supporting the lens on the lower eyelid, forming depressions or elevations on the lens' surface, and truncating the lens edge.

A second type, dynamically stabilized lenses, use the movement of the eyelids to maintain lens orientation. Dynamic stabilization methods include reducing the thickness of the lens' outer surface at two symmetrically lying regions, thickening two outer regions in the horizontal center axis, and thinning, or slabbing off, top and bottom zones on the lens.

The known methods for maintaining lens orientation suffer from a number of disadvantages. One disadvantage is that specialized tooling is required to produce the lens. Additionally, a number of these methods results in a lens that is uncomfortable to wear. For example, the use of slab offs results in the formation of sharp junctions on the lens surface that produce wearer discomfort. Thus, a need exists for a method of maintaining angular orientation that overcomes some of these disadvantages.

### Brief Description of the Drawings

FIG. 1 illustrates a plan view of an embodiment of the invention.

FIG. 2 illustrates a plan view of an embodiment of the invention.

FIG. 3 illustrates a plan view of an embodiment of the invention.

FIG. 4 is a horizontal section taken through line II-II of FIG. 1.

FIG. 5 is a vertical section taken through line III-III of FIG. 1.

### Detailed Description of the Invention and Preferred Embodiments

It is a discovery of the invention that dynamically stabilized contact lenses may be obtained by providing a lens with a variably-shaped lenticular zone. The lens of the invention is advantageous in that it may be produced without any specialized tooling and provides a lens that is comfortable to wear.

By "variably-shaped" is meant that each meridian or angular departure from the lens apex is of varying spherical or non-spherical curvature. More specifically, variably-shaped means that the lenticular zone of the lens is shaped so that its shape changes between 0° horizontal and 90° vertical, 180° horizontal and 90° vertical, 180° horizontal and 270° vertical and 360° horizontal and 270° vertical, or any combination thereof. Any suitable shape may be used such as sinusoidal, linear, aspherical, ellipsoidal, polynomial form changes in curvature, or a combination of one or more of these forms.

In one embodiment, the invention provides a contact lens comprising, consisting essentially of, and consisting of a contact lens having an outer convex surface and an inner concave surface, the convex surface comprising a variably-shaped lenticular zone. The variably-shaped lenticular zone of the lens of the invention provides a lens profile that allows the lens to be stabilized in the desired orientation with respect to the eye by the blinking action of the eye.

Contact lenses useful in the invention may be either hard or soft lenses. However, soft contact lenses are preferably used. The lenses of the invention may have any of a variety of corrective optical characteristics incorporated onto the surfaces. For example, the lens may have any one or more of spheric, aspheric, bifocal, multifocal, prismatic, or cylindric corrections. These corrections may be on either or both the convex or concave surface. The invention will find its greatest utility in lenses in which at least one of the corrective characteristics requires that the angular orientation of the lens with respect to the eye remain stable. In a preferred embodiment, the lens of the invention is a toric soft contact lens, meaning that the soft contact has a cylindrical optical surface, or power, to correct for the wearer's astigmatism.

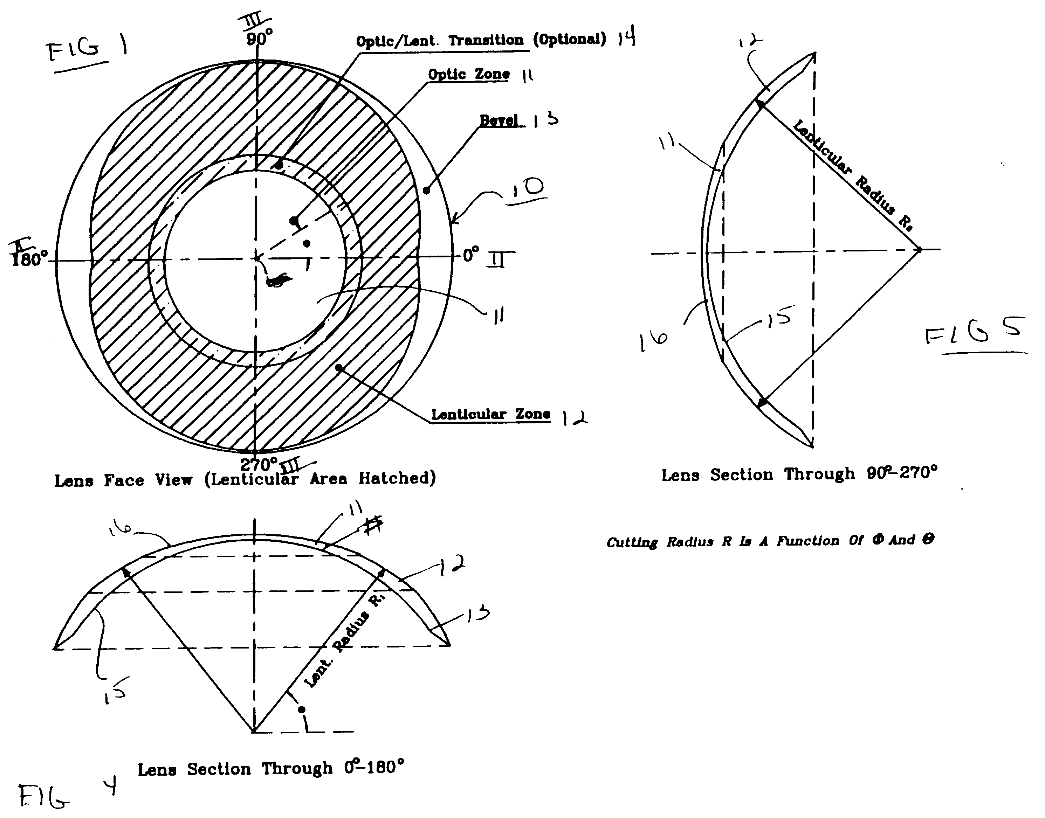

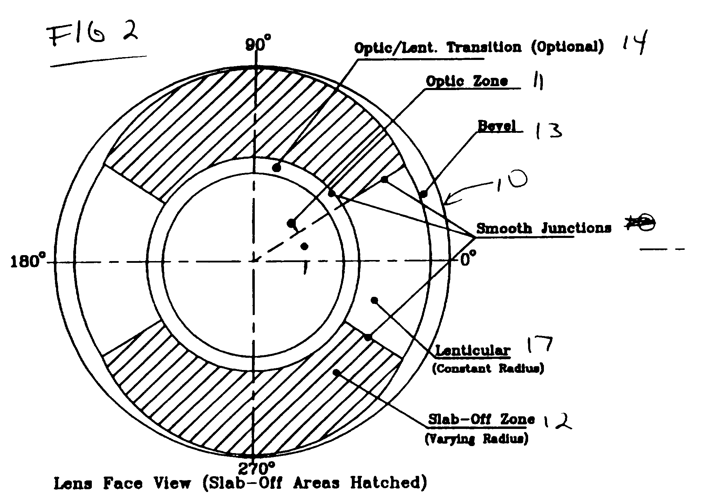

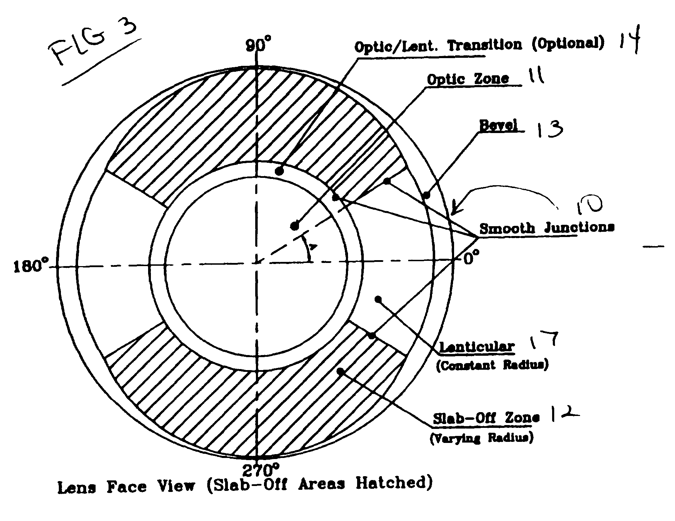

Referring now to FIGS 1 to 5, the contact lens of the invention is shown. The lens 10 has a convex outer surface 16 and concave inner surface 15, which concave surface 15 is seated on the cornea of the wearer.

The convex, or outer, surface 16 of the lens has a central optical zone 11 the center of which is the lens center 15. The optical zone 11 may be of any desired geometry, such as spherical, spherical multifocal, toric, toric multifocal, aspherical, or the like that corresponds to the wearer's required prescriptive optical power. The optical zone of the concave, or inner, surface of the lens, similarly may be of any desired geometry, but preferably is a toric, or cylindrical, surface centered about a toric axis that corrects for the wearer's astigmatism.

A non-optical lenticular zone 12 surrounds the central optical zone 11. The lenticular zone, preferably the convex surface lenticular zone, is variably-shaped. Illustrative of useful shapes that all or a portion of the lenticular zone may take include, without limitation, sinusoidal, linear, aspherical, ellipsoidal, polynomial form changes in curvature, or any combination thereof. Preferably, a sinusoidal, or spline, relationship between the 0° horizontal and the 90° vertical, or other degrees, producing a toroidal lenticular zone is preferred.

The junction of the central optical zone 11 and the lenticular zone 12 may be of any convenient shape depending on the form of the lenticular zone used. In a preferred embodiment, the lens is designed so that the mid-periphery and edges remain the same regardless of the optical correction of the lens.

In cases in which the lenticular zone is kept parametrically constant the junction of the optic and lenticular zones may produce a small, optically and mechanically undesirable area. Thus, in such lenses, it is preferable to use a transition zone 14 located between the central optical zone 11 and the lenticular zone 12 to compensate for the undesirable area.

The lens of the invention may be made by any convenient method. For example, a computer-controlled lathe with a reciprocating z-axis function may be used. One ordinarily skilled in the art will recognize that changes in shape ofthe lenticular zone may be employed either or both along each lens meridian or concentric to the lens' central axis. With reference to FIGS. 4 and 5, the cutting radius r will vary as :

$$r= f(\Theta, \Phi)$$

Thus, the horizontal meridian II-II is such that the thickest region of the lens surface is at the meridian's periphery. The vertical meridian III-III is such that the thinnest region of the surface is at the vertical meridian's periphery. In a preferred embodiment, the horizontal meridian periphery has a bevel 13.

The lens of the invention may be produced by any conventional method for producing contact lenses. For example, the lens design may be cut into a metal and the metal used to produce plastic mold inserts for the concave and convex surfaces of the lens. A suitable liquid resin is placed between the inserts, the inserts compressed, and the resin cured. Alternatively, the lens of the invention may be produced by cutting the lens on a lathe.

The lens of the invention is advantageous in that the use of varying curvatures in its design allows for more degrees of freedom in design than prior art dynamically stabilized lenses. The change in curvature of the lenticular zone may be a continuous or interrupted pattern depending on the lens meridian angle from the horizontal and distance from the center to achieve the desired lens thickness profile. Thus, it will be apparent to one ordinarily skilled in the art that the invention encompasses any one of a number of alternative designs.

## Claims

1.    A contact lens comprising an outer convex surface and an inner concave surface, the convex surface comprising a variably-shaped lenticular zone.

2.    The lens of claim 1 wherein the shape of the variably-shaped lenticular zone changes between the extreme meridians in a sinusoidal, linear, ellipsoidal, aspherical or polynomial change in curvature form or a combination thereof.

3.    The lens of claim 1 or claim 2 wherein the shape of the variably-shaped lenticular zone is toroidal.

4.    A toric soft contact lens comprising an outer convex surface and an inner concave surface, the convex surface comprising a variably-shaped lenticular zone, wherein the shape of the variably-shaped lenticular zone changes between the extreme meridians in a or sinusoidal, linear, ellipsoidal, aspherical or polynomial change in curvature form or a combination thereof.

5.    The lens of claim 4 wherein the shape of the variably-shaped lenticular zone is toroidal.

6.    The lens of any one of claims 1 to 5 wherein the convex surface has a geometry that is spherical and the concave surface has a geometry that is toric.

7.    A toric soft contact lens comprising an outer convex surface and an inner concave surface, the convex surface comprising a variably-shaped lenticular zone, wherein the shape of the variably-shaped lenticular zone is toroidal.

8.    The lens of any one of claims 1 to 7 wherein at least one of the surfaces has a geometry that is toric multifocal.

9.    The lens of any one of claims 1 to 7 wherein at least one of the surfaces has a geometry that is multifocal spherical.

10.    The lens of any one of claims 1 to 9 wherein the convex surface further comprises a bevel.

FIG 5

Lenticular Radius $R_a$

Lens Section Through 90°-270°

Cutting Radius R Is A Function Of $\Phi$ And $\Theta$

Optic/Lent. Transition (Optional) 14

Optic Zone 11

Bevel 13

0° II

10

FIG 1

III 90°

Lenticular Zone 12

Lens Face View (Lenticular Area Hatched)

270° III

IV 180°

Lent. Radius $R_1$

FIG 4   Lens Section Through 0°-180°

FIG 6

FIG 2

Optic/Lent. Transition (Optional) 14
Optic Zone 11
Bevel 13
Smooth Junctions 10
Lenticular 17 (Constant Radius)
Slab-Off Zone 12 (Varying Radius)

0°
90°
180°
270°

Lens Face View (Slab-Off Areas Hatched)

FIG 3

Optic/Lent. Transition (Optional) 14
Optic Zone 11
Bevel 13
Smooth Junctions 10
Lenticular 17
(Constant Radius)
Slab-Off Zone 12
(Varying Radius)

90°
180°
0°
270°

Lens Face View (Slab-Off Areas Hatched)

EP 0 980 015 A1

**European Patent Office**

# EUROPEAN SEARCH REPORT

Application Number

EP 99 30 6283

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 741 313 A (JOHNSON & JOHNSON VISION PROD) 6 November 1996 (1996-11-06) * column 1 – column 2, line 27 * | 1-10 | G02C7/04 |
| A | US 4 095 878 A (FANTI PETER) 20 June 1978 (1978-06-20) * column 2, line 12 – column 4, line 8 * | 1-10 | |
| A | EP 0 062 178 A (BAUSCH & LOMB) 13 October 1982 (1982-10-13) * page 6 – page 7, line 17 * | 1-10 | |
| A | EP 0 614 105 A (SCHERING CORP) 7 September 1994 (1994-09-07) * column 1 – column 3, line 50 * | 1-7 | |
| A | US 5 455 641 A (HAHNE CHRISTOPH ET AL) 3 October 1995 (1995-10-03) * column 1 – column 3 * | 1-7 | |
| A | US 5 100 225 A (ROTHE ECKHARD) 31 March 1992 (1992-03-31) * column 4, line 15 – column 5, line 61 * | 1,4,6,10 | TECHNICAL FIELDS SEARCHED (Int.Cl.7) G02C |
| A | US 5 166 710 A (HERBRECHTSMEIER PETER ET AL) 24 November 1992 (1992-11-24) * column 6, line 34 – column 7, line 8 * | 1,2 | |

The present search report has been drawn up for all claims

| Place of search | Date of completion of the search | Examiner |
|---|---|---|
| THE HAGUE | 5 November 1999 | CALLEWAERT, H |

CATEGORY OF CITED DOCUMENTS

X : particularly relevant if taken alone
Y : particularly relevant if combined with another document of the same category
A : technological background
O : non–written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 30 6283

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-1999

| Patent document cited in search report | | Publication date | Patent family member(s) | | Publication date |
|---|---|---|---|---|---|
| EP 0741313 | A | 06-11-1996 | US | 5650837 A | 22-07-1997 |
| | | | AU | 693017 B | 18-06-1998 |
| | | | AU | 5194696 A | 14-11-1996 |
| | | | CA | 2175621 A | 05-11-1996 |
| | | | JP | 8304745 A | 22-11-1996 |
| | | | SG | 47135 A | 20-03-1998 |
| US 4095878 | A | 20-06-1978 | DE | 2415108 A | 09-10-1975 |
| | | | FR | 2284893 A | 09-04-1976 |
| | | | GB | 1479526 A | 13-07-1977 |
| EP 0062178 | A | 13-10-1982 | CA | 1198618 A | 31-12-1985 |
| | | | CA | 1212209 C | 07-10-1986 |
| | | | JP | 57210319 A | 23-12-1982 |
| | | | US | 4555372 A | 26-11-1985 |
| EP 0614105 | A | 07-09-1994 | US | 5020898 A | 04-06-1991 |
| | | | AT | 137344 T | 15-05-1996 |
| | | | AT | 182410 T | 15-08-1999 |
| | | | AU | 634624 B | 25-02-1993 |
| | | | AU | 7002991 A | 01-08-1991 |
| | | | CA | 2035102 A,C | 30-07-1991 |
| | | | DE | 69118935 D | 30-05-1996 |
| | | | DE | 69118935 T | 31-10-1996 |
| | | | DE | 69131465 D | 26-08-1999 |
| | | | DK | 440107 T | 10-06-1996 |
| | | | EP | 0440107 A | 07-08-1991 |
| | | | ES | 2086421 T | 01-07-1996 |
| | | | HK | 1007445 A | 09-04-1999 |
| | | | JP | 2695056 B | 24-12-1997 |
| | | | JP | 4212925 A | 04-08-1992 |
| | | | NZ | 236905 A | 28-04-1993 |
| | | | SG | 49207 A | 18-05-1998 |
| US 5455641 | A | 03-10-1995 | AT | 145287 T | 15-11-1996 |
| | | | AU | 3698393 A | 28-10-1993 |
| | | | CA | 2094560 A | 24-10-1993 |
| | | | DE | 59304458 D | 19-12-1996 |
| | | | DK | 571320 T | 02-12-1996 |
| | | | EP | 0571320 A | 24-11-1993 |
| | | | ES | 2095027 T | 01-02-1997 |
| | | | FI | 931803 A | 24-10-1993 |
| | | | GR | 3021608 T | 28-02-1997 |
| | | | HK | 1003013 A | 30-09-1998 |
| | | | IL | 105409 A | 23-07-1996 |
| | | | JP | 6018821 A | 28-01-1994 |

EPO FORM P0459

For more details about this annex : see Official Journal of the European Patent Office, No. 12/82

**EP 0 980 015 A1**

## ANNEX TO THE EUROPEAN SEARCH REPORT
## ON EUROPEAN PATENT APPLICATION NO.

EP 99 30 6283

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-1999

| Patent document cited in search report | | Publication date | Patent family member(s) | | Publication date |
|---|---|---|---|---|---|
| US 5455641 | A | | NZ 247471 A | | 25-06-1996 |
| | | | ZA 9302838 A | | 25-10-1993 |
| US 5100225 | A | 31-03-1992 | DE 4012478 A | | 24-10-1991 |
| | | | AT 89672 T | | 15-06-1993 |
| | | | DK 452549 T | | 14-06-1993 |
| | | | EP 0452549 A | | 23-10-1991 |
| US 5166710 | A | 24-11-1992 | AT 119689 T | | 15-03-1995 |
| | | | AU 629725 B | | 08-10-1992 |
| | | | AU 6934591 A | | 25-07-1991 |
| | | | CA 2034719 A | | 25-07-1991 |
| | | | DE 59104829 D | | 13-04-1995 |
| | | | DK 439424 T | | 27-03-1995 |
| | | | EP 0439424 A | | 31-07-1991 |
| | | | ES 2069256 T | | 01-05-1995 |
| | | | GR 3015347 T | | 30-06-1995 |
| | | | HK 1000293 A | | 20-02-1998 |
| | | | IE 65624 B | | 01-11-1995 |
| | | | IL 96970 A | | 07-10-1994 |
| | | | JP 5034644 A | | 12-02-1993 |
| | | | PT 96541 A | | 15-10-1991 |

EPO FORM P0459

For more details about this annex : see Official Journal of the European Patent Office, No. 12/82

9